# FASCICULE DE BREVET EUROPEEN

(11) **EP 3 545 607 B1**
(45) Date de publication et mention de la délivrance du brevet: **11.11.2020**
(21) Numéro de dépôt: 17804510.0
(22) Date de dépôt: 20.11.2017
(51) Int. Cl.: H02K 3/51, H02K 9/193

(54) **MACHINE ÉLECTRIQUE SYNCHRONE A ROTOR BOBINÉ**
SYNCHRONELEKTROMASCHINE MIT GEWICKELTEM ROTOR
WOUND ROTOR SYNCHRONOUS ELECTRIC MACHINE

(30) Priorité: 25.11.2016 FR 1661522
(43) Date de publication de la demande: 02.10.2019
(73) Titulaire: Renault S.A.S., 92100 Boulogne-Billancourt (FR); Nissan Motor Co., Ltd., Yokohama-shi, Kanagawa 221-0023 (JP)
(72) Inventeur: MIKATI, Karim, 75116 Paris (FR); MOTTE, Emmanuel, 76150 Saint Jean du Cardonnay (FR); BERNARDIN, Fabrice, 78740 Vaux sur Seine (FR)
(74) Mandataire: Rougemont, Bernard
(86) Numéro de dépôt international: PCT/EP2017/079726
(87) Numéro de publication internationale: WO 2018/095842

(56) Documents cités:
- EP-A2- 3 007 329
- WO-A1-2005/099070
- WO-A1-2012/007920
- WO-A2-2012/176052
- DE-A1- 2 942 811

## Description

L'invention concerne une machine électrique synchrone à rotor bobiné.

Dans le domaine des machines électriques synchrones les rotors sont généralement soit des rotors à aimants permanents soit des rotors bobinés.

Les rotors bobinés présentent de nombreux avantages, notamment l'amélioration du rendement moteur en optimisant à la fois le courant rotorique et les courants statoriques, ainsi que de permettre un réglage de la vitesse simplifié en agissant directement sur les courants des bobinages du rotor.

Cependant, un inconvénient bien connu des rotors bobinés est l'échauffement produit par le passage du courant électrique dans les bobinages rotoriques.

Sachant qu'environ 30% à 40% de l'échauffement des bobinages d'un rotor bobiné se concentre au voisinage des têtes de bobines, situées aux extrémités longitudinales du rotor, une méthode de refroidissement connue consiste à projeter de l'huile, ou tout autre liquide de refroidissement, diélectrique et caloporteur, sur les têtes de bobines.

Cependant, le liquide de refroidissement projeté aux extrémités longitudinales du rotor s'accumule dans les couronnes de maintien mécanique des bobinages.

En effet, afin d'assurer un maintien ferme de la structure du rotor, notamment lorsque le rotor est entraîné en rotation à grande vitesse, on installe à chaque extrémité longitudinale du rotor, des couronnes de maintien mécanique, interdisant à l'empilage de tôle de la structure de se disloquer sous l'effet de la force centrifuge.

Ainsi, ces couronnes forment à chaque extrémité du rotor un cylindre creux saillant, définissant une ouverture centrale conduisant aux têtes de bobines rotoriques.

Lorsqu'un liquide de refroidissement est projeté sur les têtes de bobines, ces couronnes retiennent alors le liquide, qui s'accumule notamment sur les parois circonférentielles internes de l'ouverture centrale formée par la couronne en saillie du rotor.

Or, le liquide de refroidissement ainsi accumulé dans la couronne, et sous l'effet de la force centrifuge, crée une surface lisse contre la paroi circonférentielle interne de la couronne qui par capillarité s'infiltre dans l'entrefer.

Un problème est que le liquide de refroidissement présent dans l'entrefer crée des effets de frottements entre le stator et le rotor, ce qui diminue le rendement de la machine électrique.

Des machines électriques selon l'état de la technique sont divulguées dans les documents EP3007329 et WO2005/099070.

Il existe donc le besoin pour une solution permettant d'améliorer le refroidissement des bobinages rotoriques d'une machine synchrone à rotor bobiné et ne présentant pas les inconvénients de l'art antérieur.

On propose un rotor selon la revendication

Ainsi, de par l'utilisation d'un conduit d'évacuation du liquide de refroidissement dans la couronne, on peut forcer l'évacuation du liquide dans une direction de sorte que ce que cette huile ne s'engage pas dans l'entrefer de la machine. Autrement dit, le conduit d'évacuation permet de contrôler l'évacuation du liquide de refroidissement qui a été précédemment projeté à l'intérieur de la couronne, ce qui permet d'optimiser le rendement de la machine électrique, notamment en évitant que l'huile s'infiltre dans l'entrefer de la machine électrique.

Avantageusement et de manière non limitative, ladite couronne est montée à force à une extrémité longitudinale de la structure jusqu'à une butée de la structure. Ainsi, il est possible de monter de manière relativement robuste et simple la couronne sur la structure du rotor.

Selon l'invention edit conduit d'évacuation est formé d'un orifice traversant radialement ladite couronne. Ainsi le conduit d'évacuation peut être fait d'une manière relativement peu coûteuse, en ménageant un orifice directement dans la couronne, par exemple par perçage, où lors du moulage de la pièce.

Avantageusement et de manière non limitative, ladite couronne comprend au moins deux conduits diamétralement opposés. Ainsi, on peut améliorer l'évacuation du liquide de refroidissement et optimiser le débit d'expulsion en direction notamment des têtes de bobines statoriques aussi appelées « chignons statoriques », ce qui améliore le refroidissement général de la machine électrique.

Avantageusement et de manière non limitative, ladite couronne comprend huit conduits. Selon l'invention son extrémité longitudinale présente, dans une direction s'écartant de l'orifice, une réduction constante de son diamètre extérieur. Ceci permet d'obtenir une meilleure évacuation, en particulier une meilleure répartition circonférentielle mais aussi longitudinale de l'évacuation. Notamment les huit conduits sont répartis régulièrement dans la circonférence de la couronne, et l'extrémité longitudinale de la couronne présente une inclinaison plane de sorte à permettre une évacuation rapide du liquide lors que le rotor est entraîné en rotation à grande vitesse.

L'invention concerne aussi une machine électrique comprenant un rotor bobiné tel que décrit précédemment et des moyens de projection d'un liquide de refroidissement sur ladite extrémité longitudinale du rotor recevant ladite couronne de maintien.

Avantageusement et de manière non limitative, le rotor bobiné est installé dans un stator comprenant une pluralité de bobinages statoriques définissant chacun, pour chaque extrémité longitudinale du stator, une tête de bobine du stator, lesdits conduits de la couronne du rotor bobiné étant conformés pour déboucher au voisinage des têtes de bobines des bobinages statoriques, de sorte que lorsque le liquide de refroidissement est évacué par les conduits de la couronne, le liquide de refroidissement est directement projeté sur les têtes de bobines des bobinages statoriques.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue en perspective d'un rotor bobiné selon un mode de réalisation de l'invention ;
- la figure 2 est une autre vue en perspective du rotor bobiné selon le mode de réalisation de l'invention de la figure 1,
- et la figure 3 est une vue de la couronne du rotor bobiné selon une variante de réalisation de l'invention des figures 1 et 2.

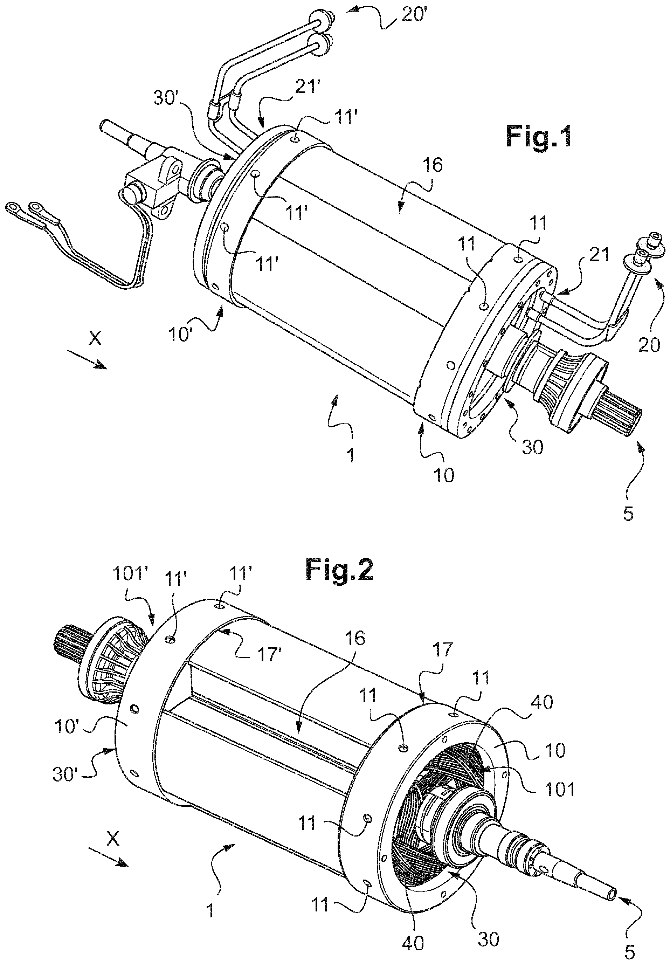

Les figures 1 et 2 se rapportant à un même mode de réalisation de l'invention, elles seront commentées simultanément.

Une machine électrique synchrone comprend un rotor bobiné 1 installé dans un stator, non représenté.

Le rotor bobiné 1, aussi appelé rotor 1, comprend une structure 16 longitudinale, faite d'un empilement de pièces de tôle, traversée dans sa longueur par un arbre 5.

Ainsi l'arbre 5, qui est couplé à rotation à la structure 16 s'étend dans une direction longitudinale X. Cette même direction longitudinale X définit l'axe principal X de révolution du rotor 1.

La structure 16 définit une succession circonférentielle de dents et d'encoches.

Des bobinages rotoriques sont installés dans les encoches de sorte à entourer les dents selon un enroulement longitudinal.

Le rotor 1 comprend ainsi une pluralité de bobinages s'étendant suivant la direction longitudinale X.

Les bobinages rotoriques définissent à chaque extrémité longitudinale 30, 30' du rotor 1 des têtes de bobines 40.

L'ensemble des têtes de bobines 40 à une extrémité longitudinale 30, 30' du rotor 1 est aussi appelé le chignon.

Afin de refroidir les bobinages du rotor 1 s'échauffant sous l'effet du passage du courant, un système de refroidissement comprend un circuit de circulation d'huile 20, 20' comportant pour chaque extrémité longitudinale 30, 30' du rotor 1, des buses de refroidissement 21 et 21'.

Dans ce mode de réalisation, on installe pour chaque extrémité longitudinale 30, 30' du rotor 1 deux buses de refroidissement 21, 21'.

Cependant, l'invention n'est pas limitée à deux buses par extrémité longitudinale 30, 30'. On peut aussi prévoir une seule buse de projection d'un liquide de refroidissement par extrémité longitudinale 30, 30', ou plus de deux buses de refroidissement par extrémité longitudinale 30, 30', et ce en fonction de l'échauffement des bobinages rotoriques.

On peut aussi prévoir un refroidissement à une seule extrémité longitudinale 30, 30' du rotor 1.

Les buses de projection 21, 21' sont orientées de sorte à permettre la projection du liquide de refroidissement, ici de l'huile de refroidissement, sur les têtes de bobines 40 du rotor 1 correspondant à l'extrémité 30, 30' à laquelle est installée la buse 21, 21'.

La projection peut, par exemple, consister en une pulvérisation de l'huile sous forme de fines gouttelettes.

Afin de maintenir les bobinages rotoriques fixes par rapport à la structure 16 du rotor 1 lorsque le rotor 1 est entraîné en rotation, notamment afin de résister à la force centrifuge, on installe à chaque extrémité longitudinale 30, 30' du rotor 1 une couronne de maintien mécanique 10, 10'.

La couronne de maintien 10, 10' est montée sur la structure 16 du rotor 1. Elle peut en particulier être engagée à force, jusqu'à une butée longitudinale 17, 17' de la structure 16, et éventuellement fixée, à l'extrémité longitudinale 30, 30' du rotor 1, autour de la structure 16, de sorte à encercler les bobinages rotoriques au voisinage des têtes de bobines 40.

Ainsi, la couronne de maintien 10, 10' s'étend circulairement, en saillie longitudinale à chaque extrémité longitudinale 30, 30' du rotor 1 de telle sorte que la couronne forme pour partie, une extrémité saillante du rotor en forme de cylindre creux définissant une ouverture centrale 101, 101' ouvrant sur les têtes de bobines 40.

Dit autrement, lorsque les couronnes 10, 10' sont installées aux extrémités longitudinales du rotor 1, elles définissent une ouverture centrale 101, 101' correspondant à un évidemment sensiblement cylindrique débouchant sur les têtes de bobines 40 depuis l'extrémité longitudinale 30, 30' correspondante du rotor 1.

Les buses de projection 21 et 21', sont installées de sorte à ce que l'huile soit projetée à l'intérieur de l'ouverture centrale 101, 101' de la couronne 10 10' correspondante.

Ainsi, lorsque le rotor 1 est entraîné en rotation, l'huile projetée remplit l'espace interne de la couronne 10, 10', en s'accumulant sur la paroi circonférentielle interne de la couronne.1
Or l'huile projeté dans l'ouverture centrale 101, 101' de la couronne 10, 10' peut s'infiltrer entre la couronne 10, 10' et la structure 16, à la jonction entre la butée 17,17' de la structure et la couronne 10,10' correspondante, ce qui peut provoquer un écoulement de l'huile dans l'entrefer de la machine électrique.

Un tel écoulement n'est pas souhaitable, dans la mesure où il crée des efforts de frottements nuisibles au rendement de la machine électrique.

Afin d'éviter que l'huile accumulée dans l'ouverture centrale 101, 101' de la couronne 10, 10' ne s'infiltre au niveau de la jonction entre la butée 17, 17' de la structure 16 du rotor 1 et la couronne 10, 10', on réalise pour chaque couronne 10, 10' au moins un et préférentiellement une pluralité de conduits d'évacuation 11, 11'.

Chaque conduit d'évacuation 11, 11' correspond à un orifice 11, 11' percé dans une paroi circonférentielle de la couronne 10 sur sa portion en saillie longitudinale de la structure 16 du rotor 1.

Les orifices 11, 11' sont des orifices traversant radiaux, qui présentent un diamètre suffisant pour permettre l'écoulement de l'huile depuis l'ouverture centrale 101, 101' de la couronne 10, 10' vers l'extérieur de la couronne 10, 10'.

Ces orifices 11, 11' facilitent non seulement l'évacuation de l'huile de l'ouverture centrale 101, 101' de la couronne 10, 10', mais empêchent aussi la formation d'une surface lisse entre la couronne 10, 10' et la butée 17, 17' correspondante de la structure 16, ce qui réduit le risque d'effet de capillarité provoquant l'infiltration de l'huile dans l'entrefer.

En particulier, les conduits 11, 11' sont conformés pour évacuer l'huile en direction des têtes de bobines du stator.

Les orifices 11, 11' sont ainsi installés sur les couronnes 10, 10', selon la direction longitudinale du rotor 1, de sorte à ce qu"ils soient en regard, ou au voisinage, des têtes de bobines statoriques, de sorte à permettre une évacuation de l'huile de la couronne 10, 10' directement sur les têtes de bobines statoriques.

Ainsi, on peut augmenter les champs de vitesse de projection d'huile sur les chignons du stator, ce qui améliore leur refroidissement et donc le rendement de la machine électrique.

Dans ce mode de réalisation, chaque couronne 10, 10' comprend huit conduits d'évacuation 11, 11', autrement dit huit orifices 11, 11' traversant radiaux.

Les orifices 11, 11' traversant radiaux sont répartis régulièrement sur la circonférence des couronnes 10, 10'.

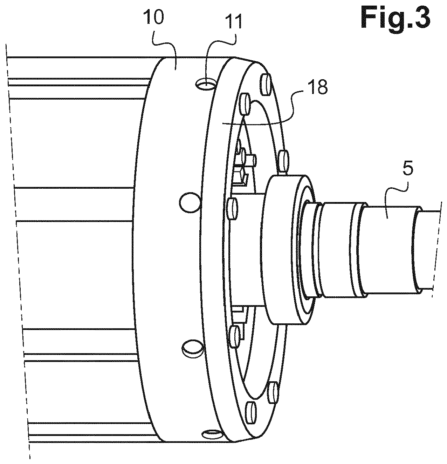

La figure 3 présente une variante de réalisation des couronnes 10, 10' du rotor 1. Seule la couronne 10 est représentée pour plus de clarté, la couronne 10' étant modifiée de façon analogue. Dans cette variante de réalisation de l'invention, la couronne 10 présente une réduction constante de son diamètre extérieur sur une extrémité longitudinale 18 de la couronne 10. Cette réduction préférentiellement plane permet à l'huile présente sur cette extrémité de la couronne, située immédiatement après les orifices 11, 11' dans la direction longitudinale X, de s'évacuer plus facilement en dehors de l'entrefer lorsqu'elle n'a pas été évacuée par ces orifices 11, 11'.

On peut, par ce dispositif, obtenir un gain quant au couple résistif de la machine électrique de l'ordre de 15% par rapport à l'art antérieur connu.

L'invention ne se limite pas uniquement à de l'huile mais à tout liquide de refroidissement diélectrique caloporteur adapté au refroidissement d'une machine électrique.

Le nombre d'orifices 11, 11' pour chaque couronne 10, 10' peut varier en fonction de la quantité d'huile à évacuer par unité de temps.

Ainsi, en fonction des caractéristiques du rotor 1, de son dimensionnement, et de la quantité d'huile projetée sur chaque tête de bobine 40, on peut prévoir d'augmenter le nombre d'orifices 11, 11' ou d'augmenter le diamètre de chaque orifice pour contrôler le flux d'évacuation de l'huile de la couronne 10, 10'.

Notamment les orifices 11, 11' d'une même couronne 10, 10' peuvent présenter des diamètres identiques ou différents.

La couronne 10,10' est formée par une tôle frappée, ou par moulage, ou par usinage en masse. La matière utilisée est par exemple un alliage d'aluminium, ou de l'acier. Elle est préférentiellement réalisée en tôle d'alliage d'aluminium frappée pour alléger le poids du rotor.

## Revendications

1. Rotor bobiné (1) comprenant une structure (16) définissant une alternance circonférentielle de dents et d'encoches, chaque dent recevant un bobinage longitudinal destiné à générer un pôle rotorique ; chaque bobinage définissant à chaque extrémité longitudinale (30, 30') du rotor une tête de bobine (40) saillante, ledit rotor (1) comprenant aussi un arbre (5) traversant ladite structure (16) selon une direction longitudinale (X), ledit rotor (1) étant apte à être refroidi par un liquide de refroidissement projeté sur lesdites têtes de bobines (40), ledit rotor (1) comprenant en outre au moins une couronne (10, 10') de maintien mécanique desdits bobinages rotoriques, installée à une extrémité longitudinale (30, 30') du rotor (1) de sorte à définir une ouverture centrale (101, 101 ') débouchant sur les têtes de bobines (40), ladite couronne (10, 10') présentant au moins un conduit d'évacuation (11, 11') apte à évacuer ledit liquide de refroidissement projeté dans l'ouverture centrale (101, 101') sur lesdites têtes de bobines (40), **caractérisé en ce que** ledit conduit d'évacuation (11, 11') est formé d'un orifice (11, 11') traversant radialement ladite couronne (10, 10'), et l'extrémité longitudinale (18) de ladite couronne présente , dans une direction s'écartant de l'orifice (11, 11'), une réduction constante de son diamètre extérieur.

2. Rotor bobiné (1) selon la revendication 1, **caractérisé en ce que** ladite couronne (10, 10') est montée à force à une extrémité longitudinale (30, 30') de la structure (16) jusqu'à une butée (17,17') de la structure (16).

3. Rotor bobiné (1) selon l'une quelconque des revendications 1 à 2, **caractérisé en ce que** ladite couronne (10, 10') comprend au moins deux conduits (11, 11') diamétralement opposés.

4. Rotor bobiné (1) selon l'une quelconque des revendications 1 à 3, **caractérisé en ce que** ladite couronne (10, 10') comprend huit conduits (11, 11').

5. Rotor bobiné (1) selon l'une quelconque des revendications 1 à 4, **caractérisé en ce que** ladite couronne (10, 10') est réalisée en tôle d'alliage d'aluminium frappée.

6. Machine électrique comprenant un rotor bobiné (1) selon l'une quelconque des revendications 1 à 5, et des moyens de projection d'un liquide de refroidissement sur ladite extrémité longitudinale (30, 30') du rotor (1) recevant ladite couronne de maintien (10, 10').

7. Machine électrique selon la revendication 6, dans laquelle le rotor bobiné (1) est installé dans un stator comprenant une pluralité de bobinages statoriques définissant chacun, pour chaque extrémité longitudinale du stator, une tête de bobine du stator, lesdits conduits (11, 11') de la couronne (10, 10') du rotor bobiné (1) étant conformés pour déboucher au voisinage des têtes de bobines des bobinages statoriques, de sorte que lorsque le liquide de refroidissement est évacué par les conduits (11, 11') de la couronne (10, 10'), le liquide de refroidissement est directement projeté sur les têtes de bobines des bobinages statoriques.

## Patentansprüche

1. Gewickelter Rotor (1), welcher eine Struktur (16) umfasst, die eine in Umfangsrichtung wechselnde Folge von Zähnen und Nuten definiert, wobei jeder Zahn eine Längswicklung aufnimmt, die dazu bestimmt ist, einen Rotorpol zu erzeugen; wobei jede Wicklung an jedem Längsende (30, 30') des Rotors einen vorstehenden Spulenkopf (40) definiert, wobei der Rotor (1) außerdem eine Welle (5) umfasst, welche die Struktur (16) in einer Längsrichtung (X) durchquert, wobei der Rotor (1) mit einer Kühlflüssigkeit kühlbar ist, die auf die Spulenköpfe (40) gespritzt wird, wobei der Rotor (1) außerdem wenigstens eine Kappe (10, 10') zum mechanischen Halten der Rotorwicklungen umfasst, die an einem Längsende (30, 30') des Rotors (1) so angebracht ist, dass sie eine Mittelöffnung (101, 101') definiert, die über den Spulenköpfen (40) mündet, wobei die Kappe (10, 10') wenigstens einen Ableitungskanal (11, 11') aufweist, der geeignet ist, die Kühlflüssigkeit abzuleiten, die in die Mittelöffnung (101, 101') auf die Spulenköpfe (40) gespritzt wird, **dadurch gekennzeichnet, dass** der Ableitungskanal (11, 11') von einer Öffnung (11, 11') gebildet wird, welche die Kappe (10, 10') radial durchquert, und das Längsende (18) der Kappe in einer Richtung weg von der Öffnung (11, 11') eine konstante Verringerung seines Außendurchmessers aufweist.

2. Gewickelter Rotor (1) nach Anspruch 1, **dadurch gekennzeichnet, dass** die Kappe (10, 10') auf ein Längsende (30, 30') der Struktur (16) bis zu einem Anschlag (17, 17') der Struktur (16) aufgepresst ist.

3. Gewickelter Rotor (1) nach einem der Ansprüche 1 bis 2, **dadurch gekennzeichnet, dass** die Kappe (10, 10') wenigstens zwei einander diametral gegenüberliegende Kanäle (11, 11') umfasst.

4. Gewickelter Rotor (1) nach einem der Ansprüche 1 bis 3, **dadurch gekennzeichnet, dass** die Kappe (10, 10') acht Kanäle (11, 11') umfasst.

5. Gewickelter Rotor (1) nach einem der Ansprüche 1 bis 4, **dadurch gekennzeichnet, dass** die Kappe (10, 10') aus geprägtem Blech aus Aluminiumlegierung hergestellt ist.

6. Elektrische Maschine, welche einen gewickelten Rotor (1) nach einem der Ansprüche 1 bis 5 und Mittel zum Spritzen einer Kühlflüssigkeit auf das Längsende (30, 30') des Rotors (1), das die Haltekappe (10, 10') aufnimmt, umfasst.

7. Elektrische Maschine nach Anspruch 6, wobei der gewickelte Rotor (1) in einen Stator eingebaut ist, der mehrere Statorwicklungen umfasst, die jeweils, für jedes Längsende des Stators, einen Spulenkopf des Stators definieren, wobei die Kanäle (11, 11') der Kappe (10, 10') des gewickelten Rotors (1) dafür ausgebildet sind, in der Nähe der Spulenköpfe der Statorwicklungen zu münden, so dass, wenn die Kühlflüssigkeit von den Kanälen (11, 11') der Kappe (10, 10') abgeleitet wird, die Kühlflüssigkeit direkt auf die Spulenköpfe der Statorwicklungen gespritzt wird.

## Claims

1. Wound rotor (1) comprising a structure (16) defining a circumferential alternation of teeth and notches, each tooth receiving a longitudinal winding intended to generate a rotor pole; each winding defining, at each longitudinal end (30, 30') of the rotor, a projecting winding head (40), said rotor (1) also comprising a shaft (5) passing through said structure (16) along a longitudinal direction (X), said rotor (1) being able to be cooled by a cooling liquid sprayed onto said winding heads (40), said rotor (1) further comprising at least one ring (10, 10') for mechanically holding said rotor windings, which ring is installed at a longitudinal end (30, 30') of the rotor (1) so as to define a central opening (101, 101') that opens onto the winding heads (40), said ring (10, 10') having at least one drainage duct (11, 11') that is suitable for draining said cooling liquid sprayed into the central opening (101, 101') onto said winding heads (40), **characterized in that** said drainage duct (11, 11') consists of an orifice (11, 11') passing radially through said ring (10, 10'), and the longitudinal end (18) of said ring has, in a direction oriented away from the orifice (11, 11'), a constant reduction in its external diameter.

2. Wound rotor (1) according to Claim 1, **characterized in that** said ring (10, 10') is press-fitted onto a longitudinal end (30, 30') of the structure (16) as far as a stop (17, 17') of the structure (16).

3. Wound rotor (1) according to either one of Claims 1 and 2, **characterized in that** said ring (10, 10') comprises at least two diametrically opposite ducts (11, 11').

4. Wound rotor (1) according to any one of Claims 1 to 3, **characterized in that** said ring (10, 10') comprises eight ducts (11, 11').

5. Wound rotor (1) according to any one of Claims 1 to 4, **characterized in that** said ring (10, 10') is made of stamped aluminium alloy sheet.

6. Electric machine comprising a wound rotor (1) according to any one of Claims 1 to 5, and means for spraying a cooling liquid onto said longitudinal end (30, 30') of the rotor (1) receiving said holding ring (10, 10').

7. Electric machine according to Claim 6, wherein the wound rotor (1) is installed in a stator comprising a plurality of stator windings each defining, for each longitudinal end of the stator, a winding head of the stator, said ducts (11, 11') of the ring (10, 10') of the wound rotor (1) being shaped so as to open out close to the winding heads of the stator windings such that, when the cooling liquid is drained by the ducts (11, 11') of the ring (10, 10'), the cooling liquid is sprayed directly onto the winding heads of the stator windings.
